# EUROPÄISCHE PATENTSCHRIFT

(11) **EP 2 448 723 B1**
(45) Veröffentlichungstag und Bekanntmachung des Hinweises auf die Patenterteilung: **04.11.2015**
(21) Anmeldenummer: 10726496.2
(22) Anmeldetag: 22.06.2010
(51) Int. Cl.: B25J 19/00, H02G 11/00

(54) **VORRICHTUNG ZUM FÜHREN EINER LEITUNG**
DEVICE FOR GUIDING A LINE
DISPOSITIF POUR GUIDER UNE LIGNE ÉLECTRIQUE OU UNE CONDUITE

(30) Priorität: 29.06.2009 DE 102009031192
(43) Veröffentlichungstag der Anmeldung: 09.05.2012
(73) Patentinhaber: Murrplastik Systemtechnik GmbH, 71570 Oppenweiler (DE)
(72) Erfinder: KUHN, Edgar, 47475 Kamp-Lintfort (DE); BIER, Klaus-Dieter, 71397 Leutenbach (DE); ROTHAMEL, Jens, 98574 Schmalkalden (DE)
(74) Vertreter: Reule, Hanspeter
(86) Internationale Anmeldenummer: PCT/EP2010/058786
(87) Internationale Veröffentlichungsnummer: WO 2011/000736

(56) Entgegenhaltungen:
- EP-A1- 1 588 807
- DE-A1-102008 062 948
- JP-A- 2002 067 828
- JP-A- 2008 062 784
- US-A- 4 076 272

## Beschreibung

Die Erfindung betrifft eine Vorrichtung zum Führen einer Leitung mit einer Führungseinrichtung, in welcher ein erster Abschnitt der Leitung in seiner Längsrichtung gegen die elastische Kraft einer Rückstelleinrichtung linear beweglich geführt ist, wobei sich an den ersten Abschnitt ein eine Längenreserve bildender gebogener zweiter Abschnitt der Leitung anschließt.

Eine solche Vorrichtung ist aus der DE 10 2004 028 577 A1 bekannt. Sie dient dem Führen eines Schlauchs, in welchem Versorgungsleitungen für einen Roboter aufgenommen sind. Die Versorgungsleitungen werden im Schlauch zu einem an einem Roboterarm befestigten Werkzeug geführt, welches durch den Roboter an seinen Einsatzort bewegt wird. Eine Bewegung des Werkzeugs bedingt eine Längenausgleichsbewegung der Versorgungsleitungen bzw. des Schlauchs, so dass eine Längenreserve vorgehalten werden muß. Die Längenreserve wird durch einen U-förmigen Abschnitt des Schlauchs gebildet, dessen U-Schenkel durch eine Bewegung des Werkzeugs verkürzt werden. Um den Schlauch nach einer Rückbewegung des Werkzeugs wieder in seine ursprüngliche Lage zu bringen, ist ein erster, gerader Abschnitt des Schlauchs in einem Rohr aufgenommen und mit einer Druckfeder in Form einer Schraubenfeder umgeben, deren Rückstellkraft den Schlauch in die Ausgangslage zurückführt. Der erste Abschnitt des Schlauchs verläuft somit in der Mitte der Schraubenfeder, und seine Längsmittelachse fällt ungefähr mit der Längsmittelachse der Schraubenfeder zusammen.

Eine solche Führungsvorrichtung hat sich in der Praxis zwar bewährt, ist jedoch aufwendig zu fertigen und daher teuer.

Eine andere Vorrichtung zum Führen einer Leitung ist aus der US 4 076 272 A bekannt. Bei dieser Vorrictung weist die Rückstelleinrichtung mindestens eine neben dem ersten Abschnitt der Leitung angeordnete, als Schraubenfeder ausgebildete Zugfeder auf, die mit einem ersten Ende mit dem ersten Abschnitt der Leitung und mit einem zweiten Ende mit der Führungseinrichtung fest verbunden ist. Die Verbindung der Zugfeder mit dem ersten Abschnitt der Leitung sowie mit der Führungseinrichtung kann direkt oder auch indirekt über weitere Bauteile erfolgen.

Es besteht jedoch das Risiko, dass die Schraubenfeder an einem ihrer Ende bei Dauerbeanspruchung bricht. Es ist daher Aufgabe der Erfindung, dieses Risiko zu reduzieren.

Die Aufgabe wird dadurch gelöst, dass in die mindestens eine Schraubenfeder an mindestens einem ihrer Enden eine ihren Querschnitt durchspannende Befestigungsplatte eingeschoben ist, die einen randoffenen Schlitz aufweist, durch den ein Drahtabschnitt der Schraubenfeder verläuft, wobei die Befestigungsplatte mit Befestigungsmitteln zum Verbinden mit dem ersten Abschnitt der Leitung oder mit der Führungseinrichtung versehen ist.

Durch diese Maßnahme greift die durch die Rückstellkraft der Schraubenfeder bedingte, von der Führungseinrichtung bzw. vom ersten Abschnitt der Leitung auf die Schraubenfeder wirkende Gegenkraft flächig an ihr an, so dass sie beim Bewegen des ersten Abschnitts der Leitung an ihren Enden nicht punktuell, sondern über ihren gesamten Querschnitt verteilt kraftbeaufschlagt wird. Durch diese Maßnahme wird das Risiko, dass die Schraubenfeder an einem ihrer Enden bei Dauerbeanspruchung bricht, deutlich reduziert. Die Befestigungsmittel können zur Einstellung einer Vorspannung der Schraubenfeder in ihrer Länge veränderlich sein.

Durch die Verwendung mindestens, einer neben dem ersten Abschnitt der Leitung angeordneter Zugfeder wird eine zuverlässige und leicht zu montierende Einrichtung bereitgestellt, die die Leitung nach einem Verschieben des ersten Abschnitts entgegen der Rückstellkraft der Zugfeder wieder in die Ausgangsposition zurückstellt. Indem die Zugfeder neben dem ersten Abschnitt der Leitung angeordnet ist, fällt ihre Längsmittelachse nicht mit der Längsmittelachse des ersten Abschnitts zusammen. Als Leitung sind hier alle Arten von Leitungen oder Leitungsbündeln zu verstehen, insbesondere auch Schläuche, Schutzschläuche und Wellschläuche, die der Aufnahme von einzelnen Leitungen, wie elektrischen Kabeln, Druckluftleitungen, Wasserleitungen und dergleichen, dienen.

Es wird bevorzugt, dass die Rückstelleinrichtung zwei Zugfedern aufweist, die mit dem ersten Abschnitt der Leitung und mit der Führungseinrichtung fest verbunden sind. Die Ausstattung der Rückstelleinrichtung mit zwei vorzugsweise parallel zueinander verlaufenden Zugfedern stabilisiert den ersten Abschnitt der Leitung, indem die Rückstellkraft gleichmäßiger an ihm angreift. Bei der Zugfeder bzw. den Zugfedern handelt es sich vorteilhaft um eine Schraubenfeder bzw. um Schraubenfedern.

Für die Führungseinrichtung sind verschiedenste Ausgestaltungen denkbar. Die einfachste Führungseinrichtung weist lediglich eine Wand mit einer Öffnung auf, durch die der erste Abschnitt der Leitung durchgeführt wird. Ebenso ist es möglich, dass die Führungseinrichtung eine Trompetenhalterung aufweist, in der der erste Abschnitt der Leitung linear verschieblich aufgenommen ist. Schließlich ist es möglich, dass der erste Abschnitt der Leitung auf einer Bodenfläche aufliegt und dass die Führungseinrichtung zwei im Abstand parallel zueinander verlaufende, auf der Bodenfläche befestigte Führungsschienen aufweist, zwischen denen der erste Abschnitt der Leitung angeordnet und linear verschieblich ist. Auch Kombinationen dieser Ausgestaltungen sind möglich.

Um die Befestigung der Zugfeder oder der Zugfedern zu erleichtern, ist am ersten Abschnitt der Leitung zweckmäßig ein umlaufender Ring angebracht, der Befestigungsmittel für die Zugfeder oder die Zugfedern aufweist. Dieser Ring kann beispielsweise ein handelsüblicher Protektor sein. Um eine ungestörte Bewegung der Längenreserve zu ermöglichen, sind der erste und der zweite Abschnitt der Leitung zweckmäßig in einem Gehäuse aufgenommen, mit dem die Führungseinrichtung fest verbunden ist, beispielsweise indem die Führungseinrichtung eine Öffnung in einer Gehäusewand ist. Dabei wird bevorzugt, dass die Zugfeder oder die Zugfedern mit ihrem zweiten Ende bzw. ihren zweiten Enden am Gehäuse befestigt ist bzw. sind. Außen am Gehäuse kann zudem ein Rohr angeordnet sein, das einen sich an den ersten Abschnitt der Leitung anschließenden dritten Abschnitt aufnimmt. Zur Variation seiner Länge wird bevorzugt, dass das Rohr auf einen vom Gehäuse abstehenden Rohrabschnitt aufgesetzt ist und mit diesem an mehreren, axial im Abstand zueinander angeordneten Raststellungen verrastbar ist.

Während der erste Abschnitt zur Herstellung des Längenausgleichs beweglich sein muß, ist es vorteilhaft, wenn der zweite Abschnitt der Leitung durch eine fest mit der Führungseinrichtung verbundene Zugentlastungseinrichtung geführt ist.

Im Folgenden wird die Erfindung anhand eines in der Zeichnung schematisch dargestellten Ausführungsbeispiels näher erläutert. Es zeigen
- Fig. 1: eine Vorrichtung zum Führen eines Schlauchs in schematischer Darstellung, welche auf einem Roboterarm montiert ist;
- Fig. 2: eine Detaildarstellung der Befestigung einer Schraubenfeder gemäß Fig. 1.

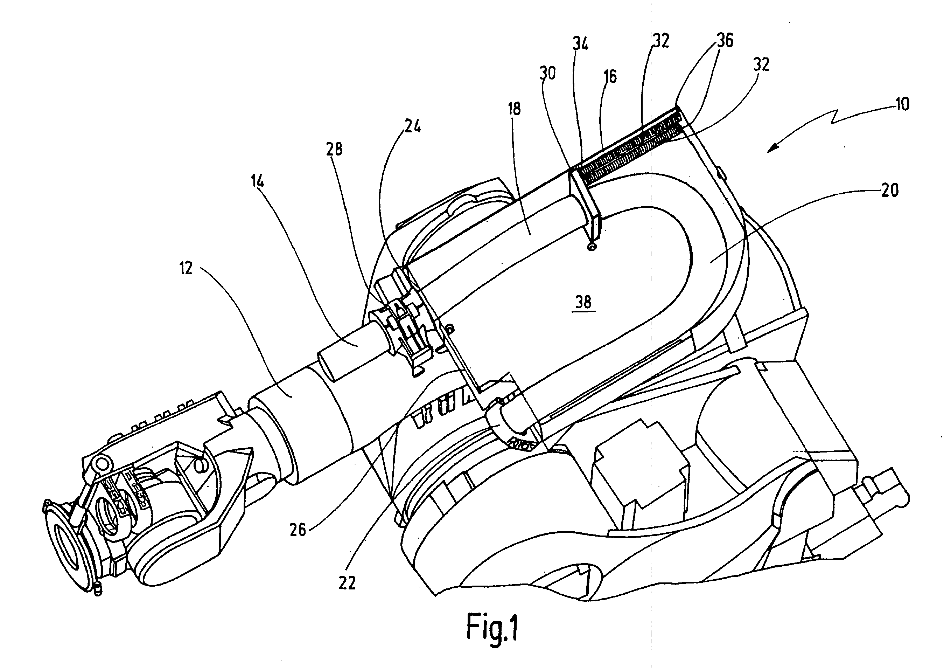

In Fig. 1 ist ein Roboter schematisch dargestellt, auf dessen Roboterarm 12 eine Führungsvorrichtung 10 befestigt ist, die dem Führen eines Kabel aufnehmenden Schutzschlauchs 14 dient. Die Führungsvorrichtung 10 weist ein Gehäuse 16 auf, von dem in der Darstellung in Fig. 1 der Deckel abgenommen ist. Im Gehäuse 16 sind ein erster, im wesentlichen gerader Abschnitt 18 und ein zweiter, U-förmig gebogener Abschnitt 20 des Schutzschlauchs 14 aufgenommen. Der zweite Abschnitt 20 ist mit seinem Ende durch eine Zugentlastung 22 durchgeführt, die am Gehäuse 16 befestigt ist. Der zweite Abschnitt 20 dient als Längenreserve, wenn ein am Ende des Roboterarms 12 angeordnetes Werkzeug bewegt wird. In diesem Fall wird der erste Abschnitt 18 in seiner Längsrichtung ein Stück weit aus dem Gehäuse 16 hinaus bewegt. Dabei ist der erste Abschnitt 18 zum einen in einer Öffnung 24 einer der Gehäusewände 26 geführt. Zudem ist außen am Gehäuse 16 eine Trompetenhalterung 28 befestigt, in der der erste Abschnitt 18 ebenfalls linear verschieblich geführt ist.

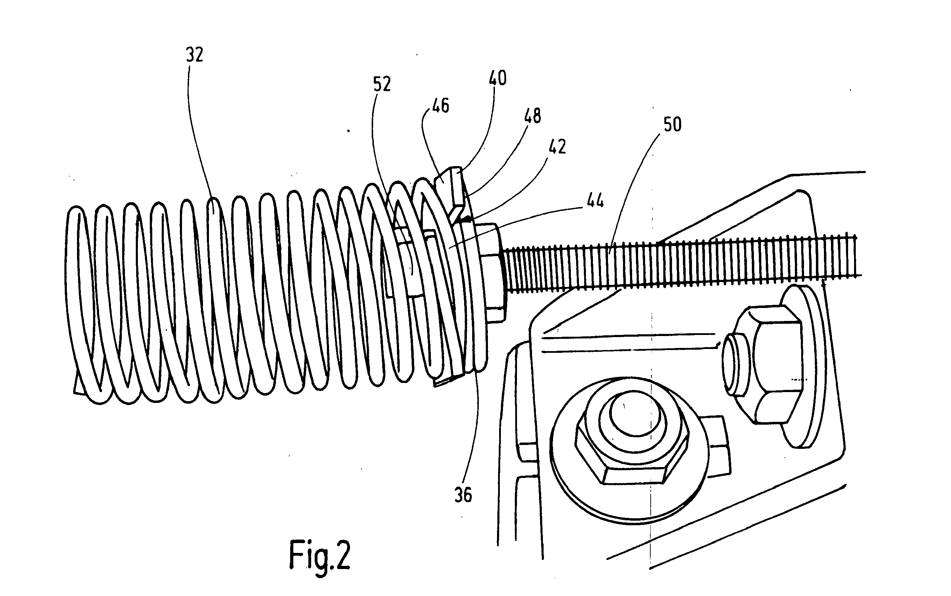

Wird das Werkzeug in seine Ausgangslage zurück bewegt, so muß auch der Schutzschlauch 14 in seine in Fig. 1 gezeigte Ausgangslage zurück bewegt werden. Zu diesem Zweck ist am ersten Abschnitt 18 ein Protektor 30 befestigt, an dem zwei als Schraubenfedern ausgebildete Zugfedern 32 mit ihren ersten Enden 34 befestigt sind. Die zweiten Enden 36 der Zugfedern 32 sind am Gehäuse 16 befestigt, so dass die Zugfedern 32 bei einer Bewegung, bei der der erste Abschnitt 18 aus dem Gehäuse 16 herausgezogen wird, gespannt werden. Sie sind so angeordnet, dass der zweite Abschnitt 20 in einer Richtung quer zu der von ihnen aufgespannten Ebene abgebogen ist. Fig. 2 zeigt beispielhaft die Befestigung einer der Zugfedern 32 am Gehäuse 16 bzw. am Protektor 30. An den Enden 34, 36 der Zugfeder 32 ist jeweils eine Befestigungsplatte 40 eingeschoben, deren Abmessungen so gestaltet sind, dass sie den gesamten Querschnitt der Zugfeder durchspannt. Die Befestigungsplatte 40 weist einen randoffenen Schlitz 42 auf, durch den ein Drahtabschnitt 44 der Schraubenfeder 32 durchgeführt ist. Der Drahtabschnitt 44 liegt somit auf der einen Seite des Schlitzes 42 an einer Oberseite 46 und an der anderen Seite des Schlitzes 42 an einer Unterseite 48 der Befestigungsplatte 40 an. Die Befestigungsplatte 40 ist im Bereich des Schlitzes 42 geringfügig verbogen, wie in Fig. 2 dargestellt. In der Mitte der Befestigungsplatte 40, die auf der Mittelachse der Zugfeder 32 liegt, ist ein fest mit dem Gehäuse 16 bzw. mit dem Protektor 30 verbundener Schraubenbolzen 50 mittels einer Mutter 52 befestigt. Durch entsprechende Positionierung der Mutter 52 bezüglich des Schraubenbolzens 50 läßt sich die Vorspannung der Zugfeder 32 einstellen.

Die in Fig. 1 gezeigte Vorrichtung 10 läßt sich noch durch einige Maßnahmen verbessern, die in der Zeichnung nicht dargestellt sind. So kann die Bodenfläche 38 des Gehäuses 16 zwei im Abstand zueinander parallel verlaufende Führungsschienen aufweisen, zwischen denen der erste Abschnitt 18 und/oder der Protektor 30 linear verschiebbar geführt ist. Um den Schutzschlauch 14 an der Stelle besser zu schützen, an der er aus dem Gehäuse 16 austritt, kann statt der Trompetenhalterung 28 an dieser Stelle ein fest mit dem Gehäuse 16 verbundenes Rohr aufgesetzt sein. Dabei wird bevorzugt, dass das Rohr in verschiedenen Raststellungen, die in seiner Längsrichtung im Abstand zueinander angeordnet sind, mit dem Gehäuse 16 verrastbar ist. Desweiteren ist es auch möglich, dass im Inneren des Gehäuses 16 und/oder jenseits der Zugentlastung 22 der Schutzschlauch 14 wegfällt, so dass das in ihm aufgenommene Leitungspaket im ersten und zweiten Abschnitt freiliegt. Der Protektor 30 und die Zugentlastung 22 bündeln dann die freiliegenden Kabel und/oder sonstigen Leitungen.

Zusammenfassend ist folgendes festzuhalten:
Die Erfindung betrifft eine Vorrichtung 10 zum Führen einer Leitung 14 mit einer Führungseinrichtung 24, 28, in welcher ein erster Abschnitt 18 der Leitung 14 in seiner Längsrichtung gegen die elastische Kraft einer Rückstelleinrichtung 32 linear beweglich geführt ist, wobei sich an den ersten Abschnitt 18 ein eine Längenreserve bildender gebogener zweiter Abschnitt 20 der Leitung 14 anschließt. Dabei ist vorgesehen, dass die Rückstelleinrichtung mindestens eine neben dem ersten Abschnitt 18 der Leitung 14 angeordnete Zugfeder 32 aufweist, die mit einem ersten Ende 34 mit dem ersten Abschnitt 18 der Leitung 14 und mit einem zweiten Ende 36 mit der Führungseinrichtung 24, 28 fest verbunden ist.

## Patentansprüche

1. Vorrichtung zum Führen einer Leitung (14) mit einer Führungseinrichtung (24, 28), in welcher ein erster Abschnitt (18) der Leitung (14) in seiner Längsrichtung gegen die elastische Kraft einer Rückstelleinrichtung (32) linear beweglich geführt ist, wobei sich an den ersten Abschnitt (18) ein eine Längenreserve bildender gebogener zweiter Abschnitt (20) der Leitung (14) anschließt, und wobei die Rückstelleinrichtung mindestens eine neben dem ersten Abschnitt (18) der Leitung (14) angeordnete, als Schraubenfeder ausgebildete Zugfeder (32) aufweist, die mit einem ersten Ende (34) mit dem ersten Abschnitt (18) der Leitung (14) und mit einem zweiten Ende (36) mit der Führungseinrichtung (24, 28) fest verbunden ist, **dadurch gekennzeichnet, dass** in die mindestens eine Schraubenfeder (32) an mindestens einem ihrer Enden eine ihren Querschnitt durchspannende Befestigungsplatte (40) eingeschoben ist, die einen randoffenen Schlitz (42) aufweist, durch den ein Drahtabschnitt (44) der Schraubenfeder (32) verläuft, wobei die Befestigungsplatte (40) mit Befestigungsmitteln zum Verbinden mit dem ersten Abschnitt (18) der Leitung (14) oder mit der Führungseinrichtung (24, 28) versehen ist.

2. Vorrichtung nach Anspruch 1, **dadurch gekennzeichnet, dass** die Rückstelleinrichtung zwei als Schraubenfedern ausgebildete Zugfedern (32) aufweist, die mit dem ersten Abschnitt (18) der Leitung (14) und mit der Führungseinrichtung (24, 28) fest verbunden sind.

3. Vorrichtung nach Anspruch 2, **dadurch gekennzeichnet, dass** die Zugfedern (32) im wesentlichen parallel zueinander verlaufen.

4. Vorrichtung nach einem der vorangehenden Ansprüche, **dadurch gekennzeichnet, dass** die Führungseinrichtung eine Wand (26) mit einer Öffnung (24) aufweist, durch die der erste Abschnitt (18) der Leitung (14) durchgeführt ist.

5. Vorrichtung nach einem der vorangehenden Ansprüche, **dadurch gekennzeichnet, dass** die Führungseinrichtung eine Trompetenhalterung (28) aufweist, in der der erste Abschnitt (18) der Leitung (14) linear verschieblich geführt ist.

6. Vorrichtung nach einem der vorangehenden Ansprüche, **dadurch gekennzeichnet, dass** der erste Abschnitt (18) der Leitung (14) auf einer Bodenfläche (38) aufliegt und dass die Führungseinrichtung zwei im Abstand parallel zueinander verlaufende, auf der Bodenfläche (38) befestigte Führungsschienen aufweist, zwischen denen der erste Abschnitt (18) der Leitung (14) angeordnet ist.

7. Vorrichtung nach einem der vorangehenden Ansprüche, **dadurch gekennzeichnet, dass** am ersten Abschnitt (18) der Leitung (14) ein umlaufender Ring, vorzugsweise ein Protektor (30), fixiert ist, an dem die mindestens eine Zugfeder (32) befestigt ist.

8. Vorrichtung nach einem der vorangehenden Ansprüche, **gekennzeichnet durch** ein den ersten und den zweiten Abschnitt (18, 20) der Leitung (14) einschließendes Gehäuse (16), mit dem die Führungseinrichtung (24, 28) fest verbunden ist.

9. Vorrichtung nach Anspruch 8, **dadurch gekennzeichnet, dass** die mindestens eine Zugfeder (32) mit ihrem zweiten Ende (36) am Gehäuse (16) befestigt ist.

10. Vorrichtung nach Anspruch 8 oder 9, **dadurch gekennzeichnet, dass** außen am Gehäuse (16) ein Rohr angeordnet ist, das einen sich an den ersten Abschnitt (18) der Leitung (14) anschließenden dritten Abschnitt aufnimmt.

11. Vorrichtung nach Anspruch 10, **dadurch gekennzeichnet, dass** das Rohr auf einen vom Gehäuse (16) abstehenden Rohrabschnitt aufgesetzt ist und mit diesem an mehreren, axial im Abstand zueinander angeordneten Raststellen verrastbar ist.

12. Vorrichtung nach einem der vorangehenden Ansprüche, **dadurch gekennzeichnet, dass** der zweite Abschnitt (20) der Leitung (14) durch eine fest mit der Führungseinrichtung (24, 28) verbundene Zugentlastungseinrichtung (22) geführt ist.

13. Vorrichtung nach einem der vorangehenden Ansprüche, **dadurch gekennzeichnet, dass** die Befestigungsmittel zur Einstellung einer Vorspannung der Schraubenfeder (32) in ihrer Länge veränderlich sind.

## Claims

1. Device for guiding a line (14) having a guiding device (24, 28) in which a first section (18) of the line (14) is guided in the longitudinal direction thereof against the elastic force of a restoring device (32) in a linearly movable manner, wherein a second curved section (20) of the line (14), which forms a longitudinal reserve, adjoins the first section (18) and wherein the restoring device comprises at least one tension spring (32) arranged next to the first section (18) of the line (14) and designed as a coil spring, said tension spring (32) being rigidly connected with a first end (34) to the first section (18) of the line (14) and with a second end (36) to the guiding device (24, 28), **characterised in that** into the at least one coil spring (32) at at least one of the ends thereof is slid a fastening plate (40), spanning its cross-section, which comprises a slot (42), which is open at the edge, through said slot runs a wire section (44) of the coil spring (32), wherein the fastening plate (40) is provided with fastening means for connecting to the first section (18) of the line (14) or to the guiding device (24, 28).

2. Device according to claim 1, **characterised in that** the restoring device comprises two tension springs (32) designed as coil springs, said tension springs being rigidly connected to the first section (18) of the line (14) and to the guiding device (24, 28).

3. Device according to claim 2, **characterised in that** the tension springs (32) run substantially parallel to each other.

4. Device according to any one of the preceding claims, **characterised in that** the guiding device comprises a wall (26) with an opening (24), through which the first section (18) of the line (14) is passed.

5. Device according to any one of the preceding claims, **characterised in that** the guiding device comprises a trumpet bracket (28), in which the first section (18) of the line (14) is guided in a linearly displaceable manner.

6. Device according to any one of the preceding claims, **characterised in that** the first section (18) of the line (14) rests on a bottom area (38) and **in that** the guiding device comprises two guiding rails running parallel at a distance to each other and fastened on the bottom area (38), between said guiding rails is arranged the first section (18) of the line (14).

7. Device according to any one of the preceding claims, **characterised in that** a surrounding ring, preferably a protector (30) is fixed to the first section (18) of the line (14), to which at least one tension spring (32) is fastened.

8. Device according to any one of the preceding claims, **characterised by** a housing (16) enclosing the first and the second section (18, 20) of the line (14), to which the guiding device (24, 28) is rigidly connected.

9. Device according to claim 8, **characterised in that** the at least one tension spring (32) is fastened with the second end (36) thereof to the housing (16).

10. Device according to claim 8 or 9, **characterised in that** a pipe is arranged outside on the housing (16), said pipe accommodating a third section adjoining the first section (18) of the line (14).

11. Device according to claim 10, **characterised in that** the pipe is superimposed on a pipe section protruding from the housing (16) and can be locked in place on said pipe section at a plurality of locking points arranged axially at a distance to each other.

12. Device according to any one of the preceding claims, **characterised in that** the second section (20) of the line (14) is guided through a tension relief device (22) rigidly connected to the guiding device (24, 28).

13. Device according to any one of the preceding claims, **characterised in that** the fastening means are variable in the length thereof for setting a pretension of the coil spring (32).

## Revendications

1. Dispositif pour guider une ligne (14), comprenant un dispositif de guidage (24, 28) dans lequel un premier tronçon (18) de la ligne (14) est guidé mobile linéairement dans sa direction longitudinale contre la force élastique d'un dispositif de rappel (32), un deuxième tronçon (20) courbe de la ligne (14), formant une réserve de longueur, se raccordant au premier tronçon (18), et le dispositif de rappel présentant au moins un ressort de traction (32) réalisé sous la forme d'un ressort hélicoïdal, disposé à côté du premier tronçon (18) de la ligne (14), qui est relié rigidement par une première extrémité (34) au premier tronçon (18) de la ligne (14) et par une deuxième extrémité (36) au dispositif de guidage (24, 28), **caractérisé en ce que** dans ledit au moins un ressort hélicoïdal (32), à au moins une de ses extrémités, est insérée une plaque de fixation (40) s'étendant sur sa section transversale, qui présente une fente (42) ouverte à un bord à travers s'étend un tronçon de fil (44) du ressort hélicoïdal (32), laquelle plaque de fixation (40) est pourvue de moyens de fixation pour la liaison avec le premier tronçon (18) de la ligne (14) ou avec le dispositif de guidage (24, 28).

2. Dispositif selon la revendication 1, **caractérisé en ce que** le dispositif de rappel présente deux ressorts de traction (32) réalisés sous la forme de ressorts hélicoïdaux, qui sont reliés rigidement au premier tronçon (18) de la ligne (14) et au dispositif de guidage (24, 28).

3. Dispositif selon la revendication 2, **caractérisé en ce que** les ressorts de traction (32) s'étendent sensiblement parallèlement l'un à l'autre.

4. Dispositif selon l'une des revendications précédentes, **caractérisé en ce que** le dispositif de guidage présente une paroi (26) avec une ouverture (24) à travers laquelle le premier tronçon (18) de la ligne (14) est passé.

5. Dispositif selon l'une des revendications précédentes, **caractérisé en ce que** le dispositif de guidage présente un élément de retenue évasé (28) dans lequel le premier tronçon (18) de la ligne (14) est guidé mobile linéairement.

6. Dispositif selon l'une des revendications précédentes, **caractérisé en ce que** le premier tronçon (18) de la ligne (14) repose sur une surface de fond (38) et que le dispositif de guidage présente deux rails de guidage s'étendant parallèlement à distance l'un de l'autre, fixés sur la surface de fond (38), entre lesquels le premier tronçon (18) de la ligne (14) est disposé.

7. Dispositif selon l'une des revendications précédentes, **caractérisé en ce qu'**un anneau périphérique, de préférence un protecteur (30), est monté sur le premier tronçon (18) de la ligne (14), auquel ledit au moins un ressort de traction (32) est fixé.

8. Dispositif selon l'une des revendications précédentes, **caractérisé par** un boîtier (16) contenant le premier et le deuxième tronçon (18, 20) de la ligne (14), auquel le dispositif de guidage (24, 28) est relié rigidement.

9. Dispositif selon la revendication 8, **caractérisé en ce que** ledit au moins un ressort de traction (32) est fixé au boîtier (16) par sa deuxième extrémité (36).

10. Dispositif selon l'une des revendications 8 ou 9, **caractérisé en ce qu'**un tube est disposé extérieurement sur le boîtier (16), lequel reçoit un troisième tronçon se raccordant au premier tronçon (18) de la ligne (14).

11. Dispositif selon la revendication 10, **caractérisé en ce que** le tube est placé sur un tronçon tubulaire faisant saillie du boîtier (16) et peut être encliqueté avec celui-ci à plusieurs positions d'encliquetage disposées à distance les unes des autres axialement.

12. Dispositif selon l'une des revendications précédentes, **caractérisé en ce que** le deuxième tronçon (20) de la ligne (14) est guidé par un dispositif de décharge de traction (22) relié rigidement au dispositif de guidage (24, 28).

13. Dispositif selon l'une des revendications précédentes, **caractérisé en ce que** les moyens de fixation sont variables en longueur pour permettre le réglage d'une précontrainte du ressort hélicoïdal (32).
